Europäisches Patentamt

European Patent Office

Office européen des brevets

(19)

(11) Veröffentlichungsnummer: **0 028 624**
**B1**

(12) **EUROPÄISCHE PATENTSCHRIFT**

(45) Veröffentlichungstag der Patentschrift: **28.12.83**

(51) Int. Cl.³: **B 29 C 27/00, H 02 K 5/15**

(21) Anmeldenummer: **80900981.4**

(22) Anmeldetag: **22.05.80**

(86) Internationale Anmeldenummer:
**PCT/DE80/00077**

(87) Internationale Veröffentlichungsnummer:
**WO 80/02529 27.11.80 Gazette 80/27**

(54) **Verfahren zum unlösbaren Befestigen eines deckelartigen Formteils.**

(30) Priorität: **23.05.79 DE 2921071**

(43) Veröffentlichungstag der Anmeldung:
**20.05.81 Patentblatt 81/20**

(45) Bekanntmachung des Hinweises auf die Patenterteilung:
**28.12.83 Patentblatt 83/52**

(84) Benannte Vertragsstaaten:
**AT CH FR GB LI**

(56) Entgegenhaltungen:
**DE - B - 1 294 647**
**FR - A - 2 112 523**
**FR - A - 2 132 069**
**GB - A - 1 153 000**

(73) Patentinhaber: **INTERELECTRIC AG**
**Brünigstrasse 220**
**CH-6072 Sachseln (CH)**

(72) Erfinder: **FÜTTERER, Bodo**
**Schönbühlring 37/25**
**CH-6005 Luzern (CH)**

(74) Vertreter: **Langhoff, Walter, Dr.**
**Wissmannstrasse 14**
**D-8000 München 81 (DE)**

Courier Press, Leamington Spa, England.

## Verfahren zum unlösbaren Befestigen eines deckelartigen Formteils

Die Erfindung betrifft ein Verfahren zum unlösbaren Befestigen eines deckelartigen Formteils aus thermoplastischem Kunststoff an einem das Formteil zumindest teilweise eng anliegend umgebenden, nicht thermoplastischen rohrförmigen Hüllteil, bei dem das Hüllteil mit Bohrungen versehen wird und durch die Bohrungen erhitzte, nicht thermoplastische Stifte kleineren Durchmessers, vorzugsweise aus Metall, in das thermoplastische Formteil eingedrückt werden, wobei thermoplastischer Kunststoff in den Spalt zwischen den Stiften und den Wänden der Bohrungen verdrängt wird.

Bei einem bekannten derartigen Verfahren wird der Stift anschließend jeweils wieder herausgezogen.

Es ist ferner bereits ein Befestigungsverfahren bekannt (GB—A—1 153 000), bei dem zwei miteinander zu verbindende, ineinandergreifende Teile durch einen ringförmigen Kranz des thermoplastischen Materials, der an der Innenwand der Bohrung anliegt, miteinander verbunden sind. Dies hat den Nachteil, daß die Befestigung eine verhältnismäßig geringe Abscherkraft aufweist und sich nur für Bauteile eignet, die keiner Erwärmung unterliegen, da der thermoplastische Kunststoff unter Wärme nachgibt und die Befestigung sich verziehen kann.

Der Erfindung liegt die Aufgabe zugrunde, ein Verfahren der eingangs genannten Art zu schaffen, welches eine Verbindung mit wesentlich erhöhter Festhaltekraft ergibt.

Die Lösung dieser Aufgabe ist darin zu sehen, daß die Stifte als verlorene Bauteile in dem thermoplastischen Formteil belassen werden.

Es ist zwar bereits ein Befestigungsverfahren bekannt (FR—AS 2 112 523), bei dem ebenfalls ein zur Befestigung dienendes nicht thermoplastisches Teil in dem thermoplastischen Formteil belassen wird, jedoch erfolgt hierbei das Verdrängen des durch das Befestigungsteil aus der Masse des thermoplastischen Teils herausgedrückten Materials durch einen zentralen Kanal in dem Befestigungsteil. Der Außendurchmesser desselben sowie die Bohrung des zu befestigenden Teils müssen dabei mit geringer Toleranz hergestellt werden, falls gewährleistet sein soll, daß beide Teile unverrückbar aneinander festgehalten werden.

Gemäß einer Weiterbildung des Verfahrens zum Befestigen eines Deckels, der eine Schulterfläche aufweist, die nach dem Einschieben des Deckels in ein rohrförmiges Hüllteil auf der Stirnfläche des Hüllteils aufliegt, wird der Deckel vor dem Einsetzen vorgewärmt und die Stifte in den vorgewärmten Deckel eingedrückt. Dadurch wird erreicht, daß die Kraft, mit der die Schulterfläche des Deckels gegen die Stirnfläche des Rohres gedrückt wird, beim Abkühlen des Deckels zunimmt, so daß sich ein besonders fester und unverrückbarer Sitz ergibt.

Zwar nimmt beim Abkühlen des Deckels auch der Durchmesser des verjüngten Bereichs desselben etwas ab, jedoch wird dadurch der Sitz des Deckels auf dem Rohrende nicht verschlechtert, da die große Andruckkraft zwischen der Schulterfläche des Deckels und der Stirnfläche des Rohres dafür sorgt, daß der Deckel sich auch in radialer Richtung nicht verschieben kann.

Gemäß einer Weiterbildung werden Stifte verwendet, in deren Mantelfläche eine Umfangsnut eingearbeitet ist. Derartige Stiffte, etwa Gewindestifte, ergeben eine feste Verankerung der Stifte in dem thermoplastischen Material.

Vorzugsweise werden Stifte verwendet, die an ihren Stirnenden verjüngt ausgebildet sind. Dadurch wird das Eindrücken des Stiftes in das thermoplastische Material erleichtert.

Die Erfindung ist im folgenden anhand schematischer Zeichnungen an einem Ausführungsbeispiel ergänzend beschrieben.

Figur 1 ist ein Axialschnitt durch ein Rohr, das durch einen Deckel mit einer Deckelbefestigung verschlossen ist;

Figur 2 ist eine vergrößerte Darstellung einer Befestigungseinrichtung.

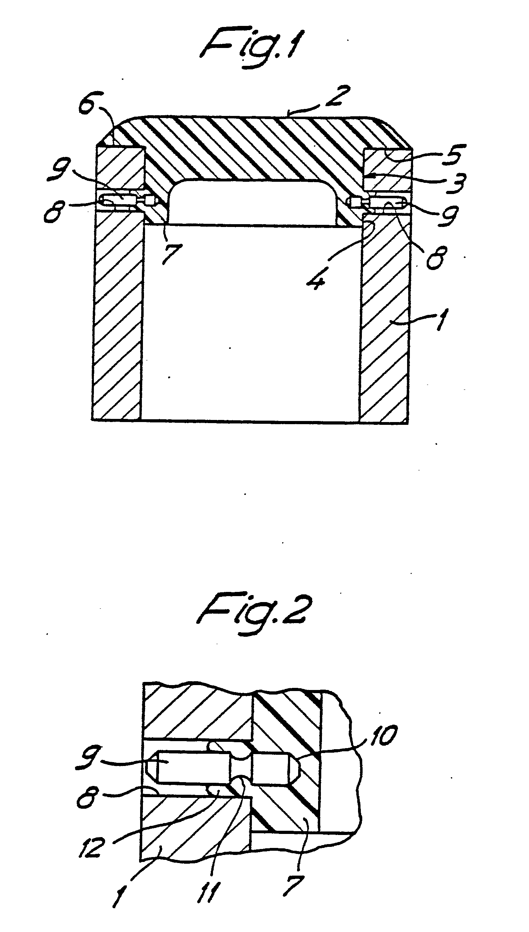

Fig. 1 zeigt ein zylindermantelförmiges Rohrstück 1, etwa ein Eisenrückschlußteil eines Elektromotors, dessen eine Stirnöffnung mit einem Deckel 2 aus Kunststoff verschlossen ist. Der Deckel 2 ist annähernd scheibenförmig gestaltet und weist an seinem äußeren Umfang eine Ausnehmung 3 auf, die einen kreiszylindrischen Umfangsbereich 4 bildet, der engsitzend in den Innenraum des Rohrstückes 1 hineinpaßt. Die Ausnehmung 3 ist in axialer Richtung durch eine kreisringförmige Schulterfläche 5 begrenzt, die auf der Stirnfläche 6 des Rohrstückes 1 aufliegt.

Der in dem Rohrstück 1 liegende Teil des Deckels 2 geht in eine Ringwulst 7 über, die an dem Rohrstück 1 anliegt.

Wie insbesondere aus Fig. 2 zu entnehmen ist, umfaßt die Befestigungsinrichtung eine Anzahl radialer Bohrungen 8, die in der Höhe der Ringwulst 7 gleichmäßig über den Umfang des Rohrstückes 1 verteilt angeordnet sind. In diese Bohrungen ist jeweils ein Stift 9 aus einem Metall eingesetzt, der an seinen Stirnenden durch Anfasungen 10 verjüngt ist und in einem mittleren Bereich eine Umfangsnut 11 aufweist.

Der Deckel 2 besteht aus einem thermoplastischen Material, die Stifte 9 aus Messing und das Rohrstück 1 aus Eisen.

Zum Befestigen des Deckels 2 auf dem Rohrstück wird der Deckel 2 auf eine Temperatur erwärmt, die größer ist als die Betriebstemperatur der fertigen Baueinheit. Sodann wird der Deckel auf das mit den Bohrungen 8 versehene Stirnende des Rohrstückes 1 aufgesetzt und danach jeweils ein Stift 9, der auf eine Temperatur oberhalb der Erweichungstemperatur des Materials des Deckels 2 erhitzt ist, in die Bohrungen 8 und bis in das Material der Ringwulst 7 hineingedrückt. Dadurch, daß der Stift aufgrund seiner hohen Temperatur das Material erweicht, wird dieses verdrängt und dringt bis in die Bohrung 8 hinein und füllt auch die Ringnut 11 aus, so daß nach dem Erkalten der Stift 9 festsitzt und zusammen mit der verdrängten Kunststoffmasse 12 den Deckel 2 festhält. Da der Deckel, wie bereits erwähnt, auf eine höhere als die Betriebstemperatur erwärmt wurde, kühlt er sich allmählich ab und zieht sich dabei zusammen, so daß die Schulterfläche 5 mit Druck auf der Stirnfläche 6 aufliegt und dadurch einen innigen und festen Sitz des Deckels auf dem Rohrstück gewährleistet.

Obwohl die Deckelbefestigung sich ganz allgemein verwenden läßt, ist sie besonders vorteilhaft einsetzbar zum Befestigen der die Bürsten und Anschlußfahnen tragenden Deckel eines Elektromotors, wobei das Rohrstück 1 ein Eisenrückschlußteil oder ein Gehäusemantel sein kann.

## Patentansprüche

1. Verfahren zum unlösbaren Befestigen eines deckelartigen Formteils (2) aus thermoplastischem Kunststoff an einem das Formteil zumindest teilweise eng anliegend umgebenden, nicht thermoplastischen rohrförmigen Hüllteil (1), bei dem das Hüllteil mit Bohrungen (8) versehen wird und durch die Bohrungen erhitzte, nicht thermoplastische Stifte (9) kleineren Durchmessers, vorzugsweise aus Metall, in das thermoplastische Formteil eingedrückt werden, wobei thermoplastischer Kunststoff (12) in den Spalt zwischen den Stiften (9) und den Wänden der Bohrungen (8) verdrängt wird, dadurch gekennzeichnet, daß die Stifte (9) als verlorene Bauteile in dem thermoplastischen Formteil (2) belassen werden.

2. Verfahren nach Anspruch 1 zum Befestigen eines Deckels (2), der eine Schulterfläche (5) aufweist, die nach dem Einschieben des Deckels in ein rohrförmiges Hüllteil (1) auf der Stirnfläche (6) des Hüllteils aufliegt, dadurch gekennzeichnet, daß der Deckel (2) vor dem Einsetzen vorgewärmt wird und die Stifte (9) in den vorgewärmten Deckel eingedrückt werden.

3. Verfahren nach Anspruch 1 oder 2, dadurch gekennzeichnet, daß Stifte (9) verwendet werden, in deren Mantelfläche eine Umfangsnut (11) eingearbeitet ist.

4. Verfahren nach Anspruch 1 bis 3, dadurch gekennzeichnet, daß Stifte (9) verwendet werden, die an ihren Stirnenden verjüngt ausgebildet sind.

## Claims

1. A method for fixedly securing a cover (2) made of a thermoplastic material to a tube-like part (1), which part is made of a non-thermoplastic material and is at least partly surrounding said cover in a closely fitting relationship, wherein tube-like part is provided with bores (8), through each of which a pin (9) of a non-thermoplastic material, preferably a metal, and of a smaller diameter than the bores is pressed into said thermoplastic cover, so that thermoplastic material (12) is displaced into the gap between a pin (9) and the wall of a coordinated bore (8), characterized in that said pins (9) are allowed to remain in place in said thermoplastic cover (2) as lost elements.

2. A method as claimed in claim 1 for fastening a cover (2) that is provided with a shoulder (5) adapted to but against the end face (6) of said tube-like part, characterized in that said cover (2) is preheated prior to insertion and that said pins are pressed into said preheated cover.

3. A method as claimed in claim 1 or 2, characterized by the use of pins (9) having a circumferential groove (11) formed in its cylindrical surface.

4. A method as claimed in claim 1 to 3, characterized by the use of pins (9) having tapered endfaces.

## Revendications

1. Procédé pour indétachablement fixer un couvercle (2) d'une matière plastique sur un membre tubulaire (1) fabriqué de matière non-plastique et entourant au moins partiellement le couvercle d'une manière collante, des alésages (8) étant prévus dans ce membre tubulaire, des chevilles (9) fabriquées d'une matière non-plastique, préférablement en métal, et d'un diamètre plus petit que le diamètre des alésage-sétant pressées dans le couvercle thermoplastique, et qui en conséquence déplacent la matière thermoplastique (12) dans la fente entre les chevilles (9) et la paroi d'un alésage (8), caractérisé en ce que les chevilles (9) sont laissées en position dans le couvercle (2) thermoplastique comme parts perdus.

2. Procédé selon la revendication 1, destiné pour la fixation d'un couvercle (2) qui est prévu d'un épaulement (5) adapté a être placé sur la face (6) du membre tubulaire, caractérisé en ce que le couvercle (2) ets échauffé avant d'être mis en place et que les chevilles sont pressées dans le couvercle échauffé.

3. Procédé selon la revendication 1 ou 2, caractérisé en ce que les chevilles (9) sont prévues d'une rainure circonférentielle (11) formée dans leurs surfaces cylindriques.

4. Procédé selon l'une des revendications 1 à 3, caractérisé en ce que les chevilles (9) sont prévues de faces bisautées.

Fig.1

Fig.2